# EUROPEAN PATENT APPLICATION

(11) **EP 4 744 923 A1**
(43) Date of publication of application: **20.05.2026**
(21) Application number: 25215414.1
(22) Date of filing: 12.11.2025
(51) Int. Cl.: B60K 1/00, B60K 25/00

(54) **ELECTRIC WORK VEHICLE**

(30) Priority: 15.11.2024 JP 2024199537
(71) Applicant: Kubota Corporation, Osaka-shi, Osaka 556-8601 (JP)
(72) Inventor: ONO, Kohei, SAKAI-SHI, OSAKA, 5900908 (JP); NAKAMORI, Yoshinori, SAKAI-SHI, OSAKA, 5900908 (JP)
(74) Representative: Cabinet Beau de Loménie

(57) **Abstract**

An electric work vehicle (10) includes a vehicle body (11), a driver's seat (31) mounted on the vehicle body (11), a traveling wheel (12B) adjacent to the driver's seat (31) in a left-right direction in a top view, the traveling wheel (12B) supporting the vehicle body (11) in a travelable manner, a battery (26) mounted on the vehicle body (11), and an electric motor (42) to which electric power is supplied from the battery (26), in which the electric motor (42) is disposed above the traveling wheel (12B).

## Description

### TECHNICAL FIELD

The present disclosure relates to an electric work vehicle.

### BACKGROUND ART

Patent Literature 1 discloses an electric work vehicle (electric tractor) that travels and performs predetermined work by driving an electric motor. The electric work vehicle includes a battery and an electric motor to which electric power is supplied from the battery. The electric motor includes a traveling electric motor that drives traveling wheels and a working electric motor that drives a hydraulic pump for supplying pressurized oil to a working device operated by hydraulic pressure. In Patent Literature 1, a traveling electric motor is mounted on a front portion of an electric work vehicle or below a driver's seat on the electric work vehicle. On the other hand, the working electric motor is disposed below the driver's seat.

### CITATION LIST

### [PATENT LITERATURE]

PATENT LITERATURE 1: Japanese Laid-Open Patent Publication No. 2024-47246

### SUMMARY OF THE INVENTION

### [TECHNICAL PROBLEM]

When the electric motor is disposed below the driver's seat as in the electric work vehicle described in Patent Literature 1, noise and vibration generated from the electric motor are transmitted to the driver, and comfort deteriorates.

An object of the present disclosure is to improve driver's comfort in an electric work vehicle.

### [SOLUTION TO PROBLEM]

An electric work vehicle according to the present disclosure includes:
a vehicle body;
a driver's seat mounted on the vehicle body;
a traveling wheel adjacent to the driver's seat in a left-right direction in a top view, the traveling wheel supporting the vehicle body in a travelable manner;
a battery mounted on the vehicle body; and
an electric motor to which electric power is supplied from the battery, in which
the electric motor is disposed above the traveling wheel.

### [ADVANTAGEOUS EFFECTS OF THE INVENTION]

According to the present disclosure, it is possible to improve driver's comfort in an electric work vehicle.

### BRIEF DESCRIPTION OF DRAWINGS

FIG. 1 is a side view of an electric work vehicle according to a first embodiment.
FIG. 2 is a plan view of a rear side of the electric work vehicle.
FIG. 3 is a rear view (partial cross-sectional view) of the electric work vehicle.
FIG. 4 is a side view (partial cross-sectional view) of the rear side of the electric work vehicle.
FIG. 5 is a side view illustrating an electric motor.
FIG. 6 is a block diagram illustrating an example of a configuration of the electric work vehicle.
FIG. 7 is a side view (partial cross-sectional view) of a rear side of an electric work vehicle according to a second embodiment.

### DETAILED DESCRIPTION

### <Outline of Embodiment of Present Disclosure>

Hereinafter, an outline of embodiments of the present disclosure will be listed and described.
(1) An electric work vehicle according to the present embodiment includes:
   a vehicle body;
   a driver's seat mounted on the vehicle body;
   a traveling wheel adjacent to the driver's seat in a left-right direction in a top view, the traveling wheel supporting the vehicle body in a travelable manner;
   a battery mounted on the vehicle body; and
   an electric motor to which electric power is supplied from the battery, in which
   the electric motor is disposed above the traveling wheel.

According to the above configuration, by disposing the electric motor on the left or right side of the driver's seat and above the traveling wheel, transmission of vibration and noise from the electric motor to the driver can be suppressed. Note that, in the above description, "the electric motor is disposed above the traveling wheel" is not limited to a case where the entire electric motor is disposed above the traveling wheel, and includes a case where at least a part of the electric motor is disposed above the traveling wheel.

(2) The electric work vehicle according to (1) includes:
a fender covering an upper portion of the traveling wheel, in which
the electric motor is disposed between the traveling wheel and the fender in a vertical direction.

According to the above configuration, the electric motor can be disposed by effectively using the space between the traveling wheel and the fender in the vertical direction, which contributes to downsizing of the electric work vehicle. Further, the noise of the electric motor can be blocked by the fender.

(3) The electric work vehicle according to (1) further includes:
a hydraulic pump that is driven by the electric motor and supplies pressurized oil to a hydraulic device, in which
the hydraulic pump is disposed above the traveling wheel.

According to the above configuration, by disposing the hydraulic pump on the left or right side of the driver's seat and above the traveling wheel, it is possible to suppress transmission of vibration and noise from the hydraulic pump to the driver. Note that, in the above description, "the hydraulic pump is disposed above the traveling wheel" is not limited to a case where the entire hydraulic pump is disposed above the traveling wheel, and includes a case where at least a part of the hydraulic pump is disposed above the traveling wheel.

(4) In the electric work vehicle according to (3), the electric motor and the hydraulic pump are arranged side by side in a front-rear direction in a top view.

According to this configuration, the electric motor and the hydraulic pump can be compactly arranged in the left-right direction, and it is possible to suppress protrusion of the electric motor and the hydraulic pump from above the traveling wheel in a left-right direction.

(5) The electric work vehicle according to (3) or (4) includes a fender covering an upper portion of the traveling wheel, in which
the electric motor and the hydraulic pump are arranged between the traveling wheel and the fender in a vertical direction.

According to this configuration, the electric motor and the hydraulic pump can be arranged by effectively using the space between the traveling wheel and the fender in the vertical direction, which contributes to downsizing of the electric work vehicle. Further, noise of the electric motor and the hydraulic pump can be blocked by the fender.

(6) The electric work vehicle according to (1) further includes:
an inverter that causes the electric motor to operate, in which
the inverter is disposed above the traveling wheel.

According to this configuration, by disposing the inverter on the left or right side of the driver's seat and above the traveling wheel, the inverter can be disposed near the electric motor, and thus the electric wiring between the two can be simplified, for example, by shortening the electric wiring. Note that, in the above description, "the inverter is disposed above the traveling wheel" is not limited to a case where the entire inverter is disposed above the traveling wheel, and includes a case where at least a part of the inverter is disposed above the traveling wheel.

(7) In the electric work vehicle according to (6), the electric motor and the inverter are arranged side by side in a front-rear direction in a top view.

According to this configuration, the electric motor and the inverter can be compactly arranged in the left-right direction, and it is possible to suppress protrusion of the electric motor and the inverter from above the traveling wheel in the left-right direction.

(8) The electric work vehicle according to (6) or (7) further includes a fender that covers an upper portion of the traveling wheel, in which
the electric motor and the inverter are arranged between the traveling wheel and the fender in the vertical direction.

According to this configuration, the electric motor and the inverter can be arranged by effectively using the space between the traveling wheel and the fender in the vertical direction, which contributes to downsizing of the electric work vehicle. Further, the noise of the electric motor can be blocked by the fender.

(9) The electric work vehicle according to (1) further includes:
a hydraulic pump that is driven by the electric motor and supplies pressurized oil to a hydraulic device; and
an inverter that causes the electric motor to operate, in which
the hydraulic pump and the inverter are arranged above the traveling wheel.

According to this configuration, by arranging the hydraulic pump and the inverter on the left or right side of the driver's seat and above the traveling wheels, transmission of vibration and noise from the hydraulic pump to the driver can be suppressed, and the inverter can be disposed near the electric motor, so that it is possible to simplify the electric wiring such as shortening the electric wiring between the hydraulic pump and the inverter.

(10) In the electric work vehicle according to (9), the electric motor, the hydraulic pump, and the inverter are arranged side by side in a front-rear direction in a top view.

According to this configuration, the electric motor, the hydraulic pump, and the inverter can be compactly arranged in the left-right direction, and it is possible to suppress protrusion of the electric motor, the hydraulic pump, and the inverter from above the traveling wheel in the left-right direction.

(11) The electric work vehicle according to (9) or (10) includes a fender covering an upper portion of the traveling wheel, in which
the electric motor, the hydraulic pump, and the inverter are arranged between the traveling wheel and the fender in a vertical direction.

According to this configuration, the electric motor, the hydraulic pump, and the inverter can be disposed by effectively using the space between the traveling wheel and the fender in the vertical direction, which contributes to downsizing of the electric work vehicle. Further, noise of the electric motor and the hydraulic pump can be blocked by the fender.

(12) In the electric work vehicle according to any one of (1) to (11), the battery is disposed in front of the driver's seat.

According to this configuration, by arranging the electric motor and the battery to be dispersed on the left or right side of the driver's seat and in front of the driver's seat, the weight balance in the front-rear direction can be achieved.

(13) The electric work vehicle according to any one of (1) to (12) further includes:
a second electric motor that drives the traveling wheel, in which
the second electric motor is disposed in front of the driver's seat.

According to this configuration, by arranging the two electric motors to be dispersed on the left or right side of the driver's seat and in front of the driver's seat, the weight balance in the front-rear direction can be achieved.

(14) The electric work vehicle according to any one of (1) to (13) further includes a second battery disposed below the driver's seat.

In the electric work vehicle described in Patent Literature 1, the electric motor is disposed below the driver's seat, but in the present disclosure, the second battery is disposed in a space below the driver's seat instead of the electric motor. Thus, the space below the driver's seat can be effectively used, and there is no inconvenience that vibration and noise are transmitted to the driver.

### <Details of Embodiment of Present Disclosure>

Hereinafter, embodiments of the present disclosure will be described in detail with reference to the drawings.

### [First Embodiment]

### [Overall Configuration of Electric Work Vehicle]

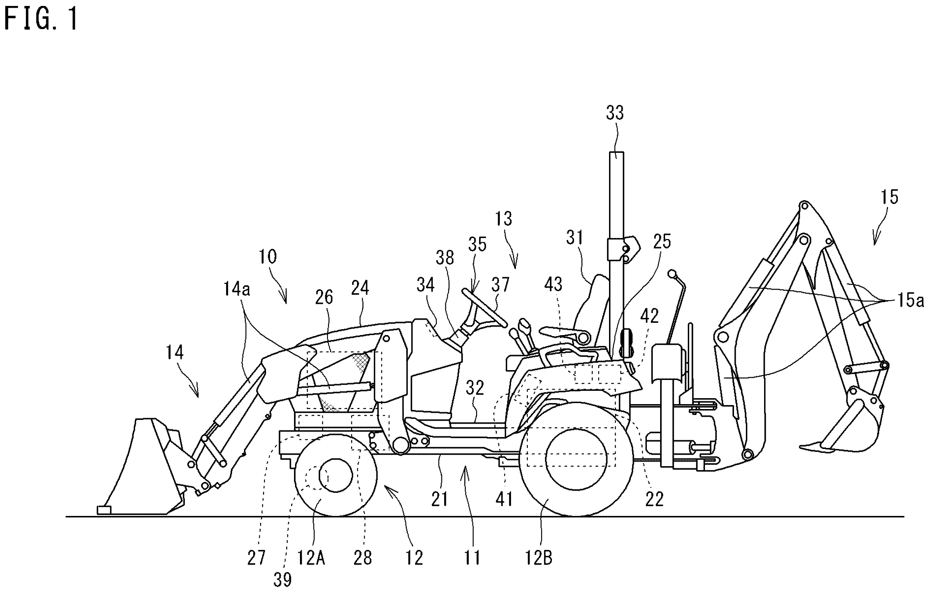

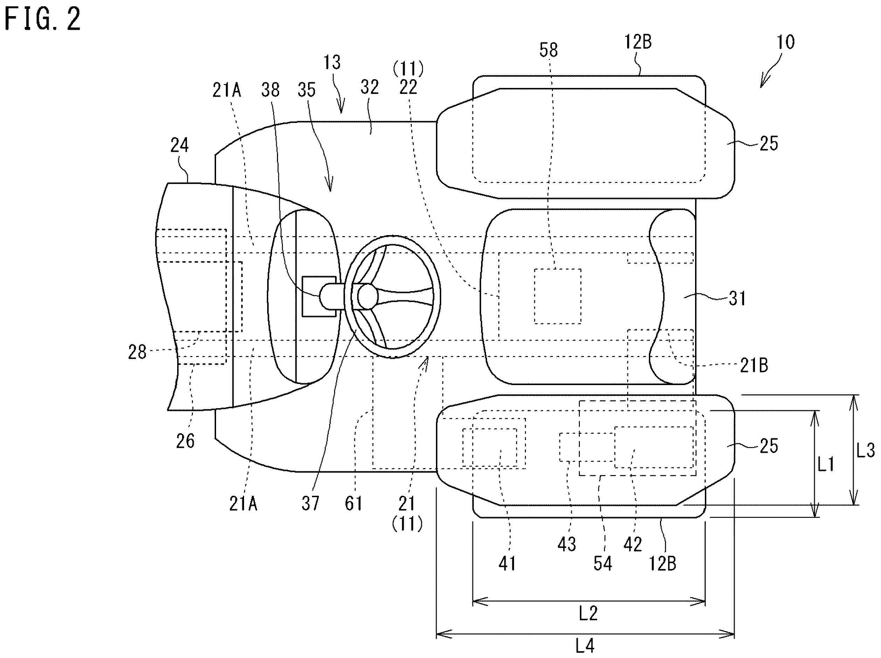

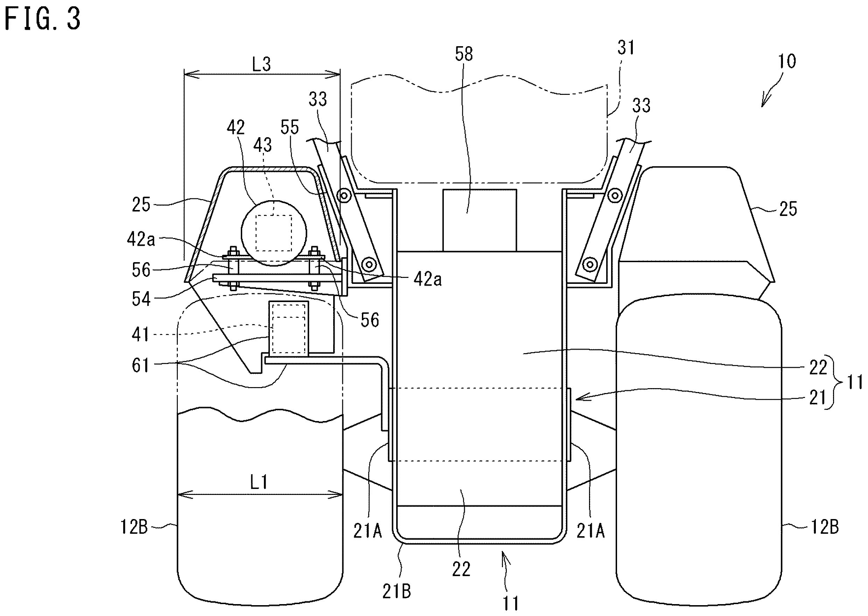

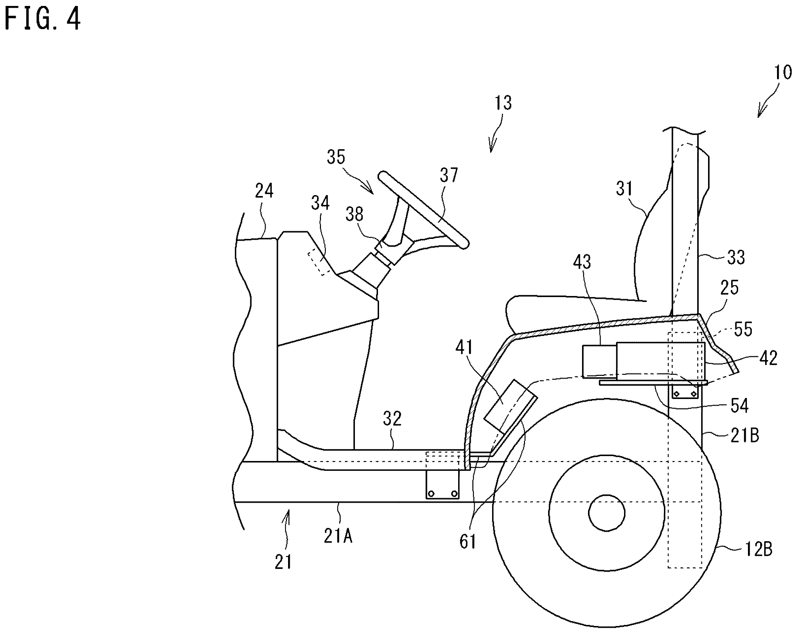

FIG. 1 is a side view of an electric work vehicle according to a first embodiment. FIG. 2 is a plan view of a rear side of the electric work vehicle. FIG. 3 is a rear view (partial cross-sectional view) of the electric work vehicle. FIG. 4 is a side view (partial cross-sectional view) of the rear side of the electric work vehicle. Note that, in the present specification, a direction in which an electric work vehicle 10 moves forward is defined as front, a direction in which the electric work vehicle 10 moves backward is defined as back, a left side of the electric work vehicle 10 facing forward is defined as left, and a right side of the electric work vehicle 10 facing forward is defined as right.

As illustrated in FIG. 1, an electric work vehicle 10 of the present embodiment is a vehicle used for farmwork, specifically, a tractor. However, the electric work vehicle 10 is not limited to the tractor, and may be a mobile object such as an agricultural machine, a construction machine, or a utility vehicle.

As illustrated in FIG. 1, the electric work vehicle 10 includes a vehicle body 11, a traveling device 12, a driving unit 13, and working devices 14 and 15.

The vehicle body 11 includes a machine body frame 21 and a transmission case 22. The machine body frame 21 is formed to be long in a front-rear direction so as to extend substantially over the entire vehicle body 11 in the front-rear direction. As illustrated in FIG. 2 to FIG. 4, the machine body frame 21 includes a main frame member 21A extending in the front-rear direction, and a rear frame member 21B disposed at a rear end of the main frame member 21A.

As illustrated in FIG. 2 and FIG. 3, the main frame member 21A includes a pair of left and right plate materials formed to be long in the front-rear direction. As illustrated in FIG. 3, the rear frame member 21B is formed of a plate material formed in a substantially U shape in rear view. The transmission case 22 is disposed at a rear portion of the machine body frame 21, particularly, between a pair of plate materials constituting the main frame member 21A. The rear frame member 21B has a mounting portion for mounting the working device 15 (see FIG. 1) disposed at a rear portion of the vehicle body 11.

The vehicle body 11 includes a hood 24 and left and right rear wheel fenders 25. As illustrated in FIG. 1, the hood 24 covers equipment disposed at a front portion of the machine body frame 21. The equipment includes, for example, a battery 26, an inverter 27, and an electric motor 28. The rear wheel fenders 25 are mudguards that cover outer peripheries of the left and right rear wheels 12B described later, mainly upper sides of the rear wheels 12B.

The traveling device 12 supports the vehicle body 11 in a travelable manner. The traveling device 12 includes left and right front wheels 12A and left and right rear wheels 12B which are traveling wheels. The front wheels 12A and the rear wheels 12B are annular tires. The left and right front wheels 12A are attached to a front axle case supported by the front portion of the machine body frame 21. The left and right rear wheels 12B are attached to rear axle cases protruding from left and right sides of the transmission case 22.

The front wheels 12A and the rear wheels 12B are driven by the electric motor 28. The front wheels 12A and the rear wheels 12B are not limited to tires, and may be other forms such as crawlers. As illustrated in FIG. 2, each rear wheel 12B protrudes outward in a left-right direction from one of the rear wheel fenders 25 in top view. However, the rear wheel 12B may be disposed within a length L3 in the left-right direction from the rear wheel fender 25 in top view.

As illustrated in FIG. 1 and FIG. 2, the driving unit 13 is disposed on the vehicle body 11. The driving unit 13 includes a driver's seat 31, an operation floor 32, a rollover protection structure (ROPS) frame 33, a meter panel 34, an operation device 35, and the like.

The driver's seat 31 is disposed above the transmission case 22. The driver's seat 31 is a part on which a driver sits to drive or operate the electric work vehicle 10. The driver's seat 31 is disposed between the left and right rear wheel fenders 25.

The operation floor 32 is disposed in front of the driver's seat 31 and on the machine body frame 21. The operation floor 32 is a portion on which the driver sitting on the driver's seat 31 places his/her foot. The operation floor 32 is provided with an operation pedal (not illustrated) and the like that can be operated by the foot of the driver sitting on the driver's seat 31.

The ROPS frame 33 extends upward from the rear end of the machine body frame 21. The ROPS frame 33 is formed in a gate shape (downward U-shape) in a front view, and a lower end thereof is connected to the machine body frame 21. The ROPS frame 33 is disposed on the rear side of the driver's seat 31 and protects the driver sitting on the driver's seat 31. The driving unit 13 may include a cabin that covers the driver's seat 31, the operation floor 32, and the like instead of the ROPS frame 33.

The operation device 35 includes a steering wheel 37 and a power steering device 38. The steering wheel 37 is disposed in front of the driver's seat 31 and above the operation floor 32. The steering wheel 37 is formed in an annular shape and rotates around a central axis to operate the direction of the front wheels 12A in the left-right direction. The steering wheel 37 is connected to an upper end of the power steering device 38. The power steering device 38 of the present embodiment is a hydraulic control unit for controlling a hydraulic cylinder 39 for steering that assists the steering force of the front wheels 12A, and switches the flow path of the pressure oil to the hydraulic cylinder 39 by operation of the steering wheel 37. The meter panel 34 is disposed in front of the steering wheel 37. The meter panel 34 includes a speed meter, a battery remaining amount meter, and the like.

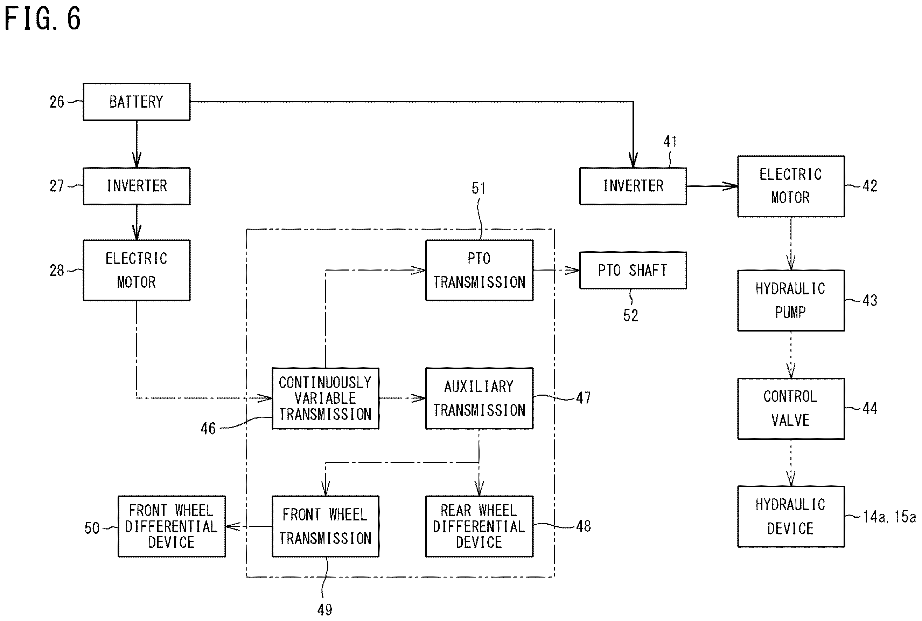

FIG. 6 is a block diagram illustrating an example of a configuration of the electric work vehicle. In FIG. 6, a solid arrow indicates a power supply system, arrows of one-dot chain lines indicate a power transmission system, and arrows of dotted lines indicate a hydraulic supply system.

The electric work vehicle 10 includes a battery 26, inverters 27 and 41, and electric motors 28 and 42. The battery 26 is a secondary battery, and can be charged by a charging facility such as a charging stand. The inverters 27 and 41 convert DC power emitted from the battery 26 into AC power. The electric motors 28 and 42 are operated by electric power supplied from the inverters 27 and 41.

The electric work vehicle 10 of the present embodiment includes two inverters 27 and 41 and two electric motors 28 and 42.

The one electric motor 28 is an electric motor of a traveling system, operates by power supplied from one inverter 27, and transmits power to a continuously variable transmission 46 provided in the transmission case 22. The continuously variable transmission 46 is, for example, a hydrostatic transmission (HST). The continuously variable transmission 46 is steplessly shiftable forward and backward, and is operated by a shift pedal (not illustrated) provided on the operation floor 32.

The output of the continuously variable transmission 46 is transmitted to a rear wheel differential device 48 via an auxiliary transmission 47 to rotationally drive the rear wheels 12B. Further, the output of the continuously variable transmission 46 is transmitted to a front wheel differential device 50 via the auxiliary transmission 47 and a front wheel transmission 49 to rotationally drive the front wheels 12A.

The power of the electric motor 28 that has passed through the continuously variable transmission 46 is transmitted to a PTO shaft 52 via a PTO transmission 51. The PTO shaft 52 transmits power to a working device such as a tiller or a seeder connected to a three-point link mechanism provided at the rear portion of the vehicle body 11. Thus, the electric motor 28 is also a PTO electric motor.

The other electric motor 42 is an electric motor of a hydraulic work system, and is operated by power supplied from the other inverter 41. The electric motor 42 drives a hydraulic pump 43. As illustrated in FIG. 1, the electric motor 42, the inverter 41, and the hydraulic pump 43 are arranged above one (left) of the left and right rear wheels 12B, and are covered from above by the rear wheel fender 25.

The hydraulic pump 43 compresses hydraulic oil and supplies the hydraulic oil to hydraulic devices 14a and 15a via a control valve 44. The electric work vehicle 10 of the present embodiment constitutes a so-called tractor loader backhoe (TLB), and a front loader 14 is attached to a front portion of the vehicle body 11 and the backhoe 15 is attached to the rear portion of the vehicle body 11. The front loader 14 includes a plurality of hydraulic cylinders (hydraulic devices) 14a for rotating a bucket and swinging a boom. The backhoe 15 includes a plurality of hydraulic cylinders (hydraulic devices) 15a for rotating the bucket and swinging the boom and the arm. The hydraulic devices each also include a lifting device that moves up and down the three-point link mechanism, the hydraulic cylinder 39 for power steering that assists steering of the front wheels 12A, and the like.

As illustrated in FIG. 2 to FIG. 4, the electric motor 42, the hydraulic pump 43, and the inverter 41 are all arranged above one of the left and right rear wheels 12B. In the present embodiment, the electric motor 42, the hydraulic pump 43, and the inverter 41 are arranged above the left rear wheel 12B.

As illustrated in FIG. 2, the electric motor 42, the hydraulic pump 43, and the inverter 41 are arranged within a length L1 of the rear wheel 12B in the left-right direction in top view. The electric motor 42 and the hydraulic pump 43 are arranged within a length L2 of the rear wheel 12B in the front-rear direction in top view. In other words, the electric motor 42 and the hydraulic pump 43 are arranged in the upper projection area of the rear wheel 12B. The inverter 41 has a rear side disposed within the length L2 of the rear wheel 12B in the front-rear direction in top view, and a front side protruding slightly forward from the rear wheel 12B.

The electric motor 42, the hydraulic pump 43, and the inverter 41 are arranged side by side in the front-rear direction. Specifically, the electric motor 42, the hydraulic pump 43, and the inverter 41 are arranged in this order from the rear to the front.

The electric motor 42 is placed on a mount table 54. The mount table 54 is attached to the rear frame member 21B of the machine body frame 21. More specifically, the rear frame member 21B includes an attachment bracket 55 to which the lower end of the ROPS frame 33 is attached at an upper portion, and the mount table 54 is fixed to the attachment bracket 55. An upper surface of the mount table 54 is arranged substantially horizontally. The electric motor 42 is disposed on the mount table 54 in a substantially horizontal posture. The electric motor 42 is disposed slightly behind the axial center of the rear wheel 12B. The electric motor 42 is covered from below by the mount table 54.

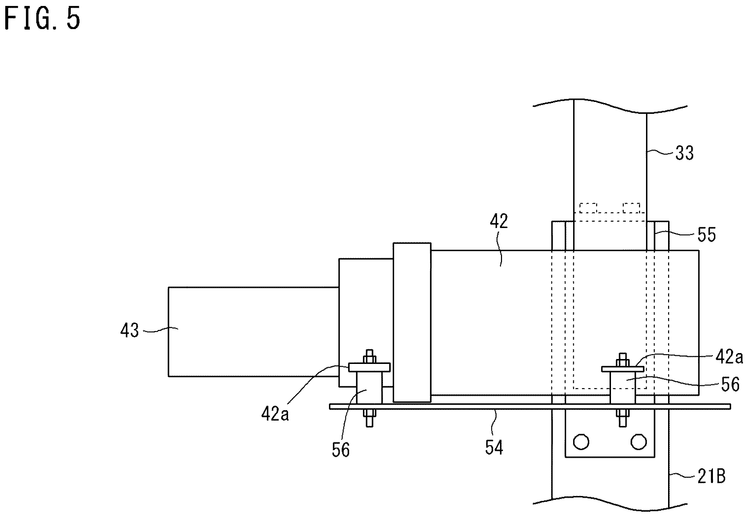

FIG. 5 is a side view illustrating the electric motor.

As illustrated in FIG. 3 and FIG. 5, the electric motor 42 includes attachment plates 42a protruding in the left-right direction on front and rear sides of left and right side surfaces. The attachment plate 42a and the mount table 54 are connected by a fastener 57 such as a bolt or a nut in a state where the movement in the horizontal direction is restricted and the movement in the vertical direction is allowed. Further, a buffer member 56 made of an elastic material such as rubber or synthetic resin is interposed between the attachment plate 42a and the mount table 54. The buffer member 56 is compressed when the attachment plate 42a and the electric motor 42 approach each other in the vertical direction. Thus, the buffer member 56 can absorb vibration caused by traveling of the electric work vehicle 10 or the like, and can suppress transmission to the electric motor 42.

As illustrated in FIG. 2 to FIG. 4, the hydraulic pump 43 is connected to the front end of the electric motor 42. The hydraulic pump 43 is supported by the electric motor 42. The hydraulic pump 43 is disposed in a substantially horizontal posture. The hydraulic pump 43 is disposed above the axial center of the rear wheel 12B or on a front side of the axial center. The hydraulic pump 43 receives the rotational power of the electric motor 42 and compresses the hydraulic oil. The hydraulic oil is accommodated in the transmission case 22.

The inverter 41 is placed on a mount table 61 on the front side of the hydraulic pump 43. The mount table 61 is attached to the main frame member 21A of the machine body frame 21. Specifically, one end (front end) of the mount table 61 is fixed to an outer surface of the main frame member 21A in the left-right direction, and the mount table 61 extends obliquely backward and upward. The front end of the mount table 61 is disposed below the operation floor 32.

The inverter 41 is placed and fixed on an upper surface of the mount table 61 facing obliquely forward and upward. Thus, the inverter 41 is disposed in a posture inclined forward and downward.

The inverter 41 is disposed on a front side with respect to the axial center of the rear wheel 12B. The inverter 41 is inclined so as to extend substantially along an outer peripheral surface (arcuate surface) of the rear wheel 12B that is on the upper side and the front side of the axial center of the rear wheel 12B. The inverter 41 is covered from the rear wheel 12B side by the mount table 61 interposed between the inverter and the rear wheel 12B.

As illustrated in FIG. 1, FIG. 3, and FIG. 4, the electric motor 42, the hydraulic pump 43, and the inverter 41 are arranged between the rear wheel 12B and the rear wheel fender 25 in the vertical direction. The electric motor 42, the hydraulic pump 43, and the inverter 41 are covered with the rear wheel fender 25 from above. The electric motor 42, the hydraulic pump 43, and the inverter 41 are arranged within the length L3 in the left-right direction and a length L4 in the front-rear direction of the rear wheel fender 25 in top view. The mount tables 54 and 61 are also arranged within the length L3 in the left-right direction and the length L4 in the front-rear direction of the rear wheel fender 25 in top view. In other words, the electric motor 42, the hydraulic pump 43, the inverter 41, and the mount tables 54 and 61 are arranged in a downward projection region of the rear wheel fender 25.

As illustrated in FIG. 1 and FIG. 4, the electric motor 42, the hydraulic pump 43, and the inverter 41 are also covered from the front by the rear wheel fender 25. The electric motor 42, the hydraulic pump 43, and the inverter 41 are arranged within the length in the left-right direction of the rear wheel fender 25 in front view.

Note that a part of the electric motor 42, the hydraulic pump 43, and the inverter 41 may protrude from the length L3 in the left-right direction and the length L4 in the front-rear direction of the rear wheel fender 25. A portion of the mount tables 54 and 61 may also protrude from the length L3 in the left-right direction and the length L4 in the front-rear direction of the rear wheel fender 25.

As illustrated in FIG. 1, the electric motor 42, the hydraulic pump 43, and the inverter 41 are also covered from the side (left side) by the rear wheel fender 25. More specifically, as illustrated in FIG. 4, the electric motor 42, the hydraulic pump 43, and the inverter 41 are arranged within the length L4 of the rear wheel fender 25 in the front-rear direction in a side view. Further, the electric motor 42, the hydraulic pump 43, and the inverter 41 are arranged so as to slightly protrude downward from a vertical length of the rear wheel fender 25 in a side view. However, the entire electric motor 42, hydraulic pump 43, and inverter 41 may be arranged within the length in the vertical direction of the rear wheel fender 25 in a side view.

As described above, in the electric work vehicle 10 of the present embodiment, the electric motor 42 is disposed on the left or right side of the driver's seat 31 and above the rear wheel 12B which is a traveling wheel. Thus, it is possible to suppress transmission of vibration and noise from the electric motor 42 to the driver sitting on the driver's seat 31. Similarly, the hydraulic pump 43 is also disposed above the rear wheel 12B. Therefore, it is possible to suppress transmission of vibration and noise of the hydraulic pump 43 to the driver.

In the present embodiment, the electric motor 42, the hydraulic pump 43, and the inverter 41 are arranged side by side in the front-rear direction. Thus, these parts 42, 43, and 41 can be compactly arranged in the left-right direction. In addition, these parts 42, 43, and 41 can be arranged above the rear wheel 12B.

The inverter 41 is disposed above the rear wheel 12B together with the electric motor 42. Therefore, the inverter 41 and the electric motor 42 can be arranged at positions close to each other, and the electric wiring therebetween can be shortened and simplified.

In the present embodiment, the electric motor 42, the hydraulic pump 43, and the inverter 41 are arranged between the rear wheel 12B and the rear wheel fender 25 in the vertical direction. Thus, the electric motor 42, the hydraulic pump 43, and the inverter 41 can be arranged by effectively utilizing the space formed between the rear wheel 12B and the rear wheel fender 25 in the vertical direction, which contributes to miniaturization of the electric work vehicle 10. Further, noise from the electric motor 42 and the hydraulic pump 43 can be blocked by the rear wheel fender 25, and transmission of the noise to the driver sitting on the driver's seat 31 can be suppressed.

In the present embodiment, the electric motor 42 is covered by the mount table 54 from below. Thus, it is possible to prevent mud splashed by the rotation of the rear wheel 12B from adhering to the electric motor 42. Similarly, the inverter 41 is covered by the mount table 61 from the rear wheel 12B side. Thus, it is possible to prevent mud splashed by the rotation of the rear wheel 12B from adhering to the inverter 41. Therefore, the mount tables 54 and 61 also have a function as a fender.

The electric work vehicle 10 of the present embodiment includes two electric motors 28 and 42, the electric motor 28 of one traveling/PTO system is disposed in front of the driver's seat 31, and the electric motor 42 of the other hydraulic work system is disposed on the side of the driver's seat 31. By arranging the two electric motors 28 and 42 to be dispersed in the front-rear direction in this manner, the weight balance in the front-rear direction of the electric work vehicle 10 can be achieved.

As illustrated in FIG. 2 and FIG. 3, a battery 58 is disposed below the driver's seat 31 and above the transmission case 22. Unlike the battery 26 mounted on the front portion of the vehicle body 11 that drives the electric motors 28 and 42, the battery 58 is a so-called accessory battery that supplies power to devices such as lights, air conditioning devices, and information devices.

Therefore, the electric work vehicle 10 of the present embodiment includes two batteries 26 and 58, one battery 26 is disposed in front of the driver's seat 31, and the other battery 58 is disposed below the driver's seat 31. In this manner, by arranging the two batteries 26 and 58 to be dispersed in the front-rear direction, the weight balance in the front-rear direction of the electric work vehicle 10 can be achieved.

Note that the battery 58 may be disposed on the left or right side (for example, the right side) of the driver's seat 31, or may be disposed behind the driver's seat 31.

### [Second Embodiment]

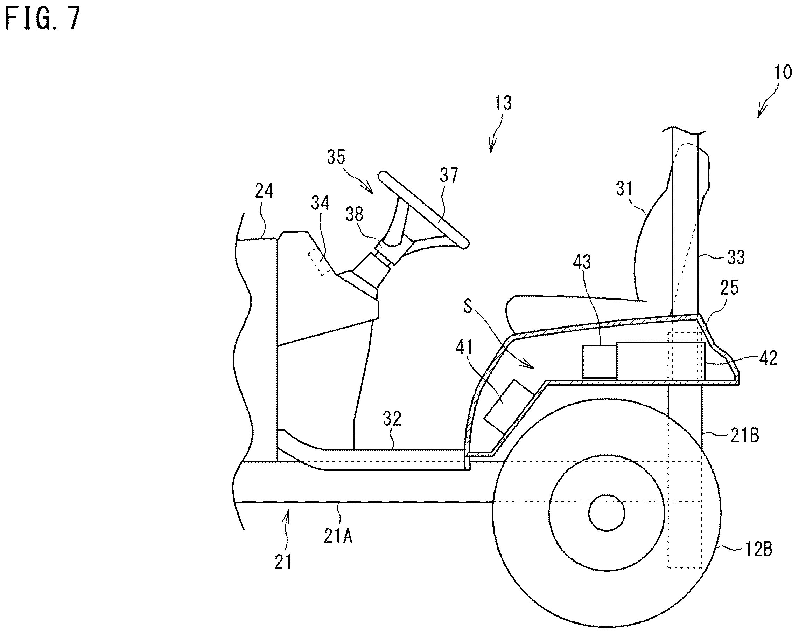

FIG. 7 is a side view (partial cross-sectional view) of a rear side of an electric work vehicle according to a second embodiment.

In an electric work vehicle 10 of the present embodiment, a rear wheel fender 25 that covers an outer periphery of a rear wheel 12B has a space S therein, and an electric motor 42, a hydraulic pump 43, and an inverter 41 are arranged in the space S. Therefore, similarly to the first embodiment, the electric motor 42, the hydraulic pump 43, and the inverter 41 are arranged above the rear wheel 12B. Further, the electric motor 42, the hydraulic pump 43, and the inverter 41 are arranged in this order from the back to the front side in the front-rear direction.

In the present embodiment, the electric motor 42, the hydraulic pump 43, and the inverter 41 may be supported by the rear wheel fender 25, or may be supported by a mount table attached by the machine body frame 21 as in the first embodiment.

In the present embodiment, the rear wheel fender 25 can prevent mud splashed by the rotation of the rear wheel 12B from adhering to the electric motor 42, the hydraulic pump 43, and the inverter 41. Other operations and effects are substantially the same as those of the first embodiment.

### [Other Embodiments]

The embodiment disclosed herein is illustrative in all respects and is not restrictive. The scope of rights of the present invention is not limited to the above-described embodiments, and includes all modifications within the scope equivalent to the configurations described in the claims.

For example, the arrangement order of the electric motor 42, the hydraulic pump 43, and the inverter 41 in the front-rear direction can be appropriately changed without being limited to the above embodiment. Further, all of the electric motor 42, the hydraulic pump 43, and the inverter 41 need not be arranged side by side in the front-rear direction, and any two thereof only need to be arranged side by side in the front-rear direction.

The hydraulic pump 43 and the inverter 41 are not necessarily arranged above the rear wheel 12B or between the rear wheel 12B and the rear wheel fender 25 in the vertical direction.

The vehicle body 11 may not necessarily include the rear wheel fender 25.

In the above embodiment, the electric motor 42 of the hydraulic work system is disposed above the rear wheel 12B, but the electric motor 28 of the traveling system may be disposed above the rear wheel 12B.

### REFERENCE SIGNS LIST

- 10: electric work vehicle
- 11: vehicle body
- 12B: rear wheel (traveling wheel)
- 25: rear wheel fender
- 26: battery
- 27: inverter
- 28: electric motor
- 31: driver's seat
- 41: inverter
- 42: electric motor
- 43: hydraulic pump
- 58: battery

## Claims

1. An electric work vehicle (10) comprising:
a vehicle body (11);
a driver's seat (31) mounted on the vehicle body (11);
a traveling wheel (12B) adjacent to the driver's seat (31) in a left-right direction in a top view, the traveling wheel (12B) supporting the vehicle body (11) in a travelable manner;
a battery (26) mounted on the vehicle body (11); and
an electric motor (28, 42) to which electric power is supplied from the battery (26),
wherein the electric motor (28, 42) is disposed above the traveling wheel (12B).

2. The electric work vehicle (10) according to claim 1, comprising a fender (25) covering an upper portion of the traveling wheel (12B),
wherein the electric motor (42) is disposed between the traveling wheel (12B) and the fender (25) in a vertical direction.

3. The electric work vehicle (10) according to claim 1, further comprising a hydraulic pump (43) that is driven by the electric motor (42) and supplies pressurized oil to a hydraulic device (14a, 15a),
wherein the hydraulic pump (43) is disposed above the traveling wheel (12B).

4. The electric work vehicle (10) according to claim 3, wherein the electric motor (42) and the hydraulic pump (43) are arranged side by side in a front-rear direction in a top view.

5. The electric work vehicle (10) according to claim 3 or 4, comprising a fender (25) covering an upper portion of the traveling wheel (12B),
wherein the electric motor (42) and the hydraulic pump (43) are arranged between the traveling wheel (12B) and the fender (25) in a vertical direction.

6. The electric work vehicle (10) according to claim 1, further comprising an inverter (41) that causes the electric motor (42) to operate,
wherein the inverter (41) is disposed above the traveling wheel (12B).

7. The electric work vehicle (10) according to claim 6, wherein the electric motor (42) and the inverter (41) are arranged side by side in a front-rear direction in a top view.

8. The electric work vehicle (10) according to claim 6 or 7, comprising a fender (25) covering an upper portion of the traveling wheel (12B),
wherein the electric motor (42) and the inverter (41) are arranged between the traveling wheel (12B) and the fender (25) in the vertical direction.

9. The electric work vehicle (10) according to claim 1, further comprising:
a hydraulic pump (43) that is driven by the electric motor (42) and supplies pressurized oil to a hydraulic device (14a, 15a); and
an inverter (41) that causes the electric motor (42) to operate,
wherein the hydraulic pump (43) and the inverter (41) are arranged above the traveling wheel (12B).

10. The electric work vehicle (10) according to claim 9, wherein the electric motor (42), the hydraulic pump (43), and the inverter (41) are arranged side by side in a front-rear direction in a top view.

11. The electric work vehicle (10) according to claim 9 or 10, comprising a fender (25) covering an upper portion of the traveling wheel (12B),
wherein the electric motor (42), the hydraulic pump (43), and the inverter (41) are arranged between the traveling wheel (12B) and the fender (25) in a vertical direction.

12. The electric work vehicle (10) according to any one of claims 1 to 4, 6, 7, 9, and 10, wherein the battery (26) is disposed in front of the driver's seat (31).

13. The electric work vehicle (10) according to any one of claims 1 to 4, 6, 7, 9, and 10, further comprising a second electric motor (28) that drives the traveling wheel (12B),
wherein the second electric motor (28) is disposed in front of the driver's seat (31).

14. The electric work vehicle (10) according to any one of claims 1 to 4, 6, 7, 9, and 10, further comprising a second battery (58) disposed below the driver's seat (31).
